# EUROPEAN PATENT SPECIFICATION

(11) **EP 2 919 448 B1**
(45) Date of publication and mention of the grant of the patent: **28.11.2018**
(21) Application number: 15158845.6
(22) Date of filing: 12.03.2015
(51) Int. Cl.: H04M 3/42, G06F 21/32

(54) **A METHOD FOR CREATING A COLLECTION OF SOUND SIGNATURES FOR IDENTIFYING OBJECTS**
VERFAHREN ZUR ERZEUGUNG EINER SAMMLUNG VON TONSIGNATUREN ZUR IDENTIFIZIERUNG VON GEGENSTÄNDEN
PROCÉDÉ PERMETTANT DE CRÉER UNE COLLECTION DE SIGNATURES ACOUSTIQUES POUR IDENTIFIER DES OBJETS

(30) Priority: 13.03.2014 IL 23152714
(43) Date of publication of application: 16.09.2015
(73) Proprietor: Deutsche Telekom AG, 53113 Bonn (DE)
(72) Inventor: Elovici, Yuval, 79864 Arugot (IL); Shapira, Bracha, Beer Sheva (IL); Chizi, Barak, Ashkelon (IL); Mimran, Dudu, Tel Aviv (IL)
(74) Representative: Perani & Partners S.p.A.

(56) References cited:
- US-A1- 2004 223 605
- US-A1- 2009 043 818

## Description

### Field of the Invention

The present invention relates to the field of monitoring and alerting systems. More particularly, the invention relates to a system and method for creating a reliable collection of context based alerts in the form of sounds that are uniquely associated with objects and/or with users of a communication system, as well as with their relevant status.

### Background of the Invention

Objects and other real entities such as persons, points of interest, service points, points of sale etc., can be identified using several ways. The most popular way is by visual recognition, such as a photographs or pictures of an object, which are based on direct identification. For example, such photographs are attached to messages that are sent to mobile devices of users over a cellular network. Other ways may include indirect identification, such as signatures or symbols, which represent the object. Still, indirect identification requires visual identification and association.

Other indirect identification ways are based solely on association. For example, a caller may be recognized by his phone number which appears on the display of the mobile device of the recipient. Other ways based on association may be voice recognition. Alternatively, a caller may be recognized by means of a customized alert as disclosed in US 2004/0223605. However, these methods are not supervised and are subject to frauds, as each person or entity can select its representation. For example, a person may impersonate to another person by sending a message with a fake photograph or call from a virtual phone number.

It is therefore desired to create a reliable collection of context based alerts in the form of sounds that are uniquely associated with objects and/or with users of a communication system, as well as with their relevant context.

It is an object of the present invention to provide a reliable collection of context based alerts in the form of sounds that are uniquely associated with objects and/or with users of a communication system.

It is another additional object of the present invention to provide a reliable collection of context based alerts in the form of sounds that are uniquely associated with objects and/or with users of a communication system, which is supervised.

It is a further additional object of the present invention to provide a reliable collection of context based alerts in the form of sounds that are uniquely associated with objects and/or with users of a communication system, which is dynamic and relevant to their current status.

Other objects and advantages of the invention will become apparent as the description proceeds.

### Summary of the Invention

The present invention is directed to a method for creating a database of sound signatures that are uniquely associated with entities linked to a communication system, comprising the steps of:
a) by a person authorized by an entity that is linked to said communication system, recording at least one characteristic sound signature associated with said entity and uploading a profile and said at least one characteristic sound signature to a database, said entity being a physical entity, a user, a point of sale or a service provider and said at least one characteristic sound signature is uploaded in conjunction with a dedicated application installed on a cellphone of said authorized person;
b) submitting an application (physically or by electronic means), by said authorized person, for registering said at least one sound signature with said database;
c) allowing or denying the registration of said at least one sound signature as a record in said database by examining said at least one sound signature and determining whether it complies with a set of signature related criteria (such as the length of the sound signature, its quality, allowed content, and a rule who is authorized to submit the application); and
d) storing said at least one sound signature in said database following registration, along with an association with a location of said entity as defined in said profile.

One of the stored sound signatures may be played by the communication system in order to identify the entity.

The authorized person may remotely activate one of the stored sound signatures in conjunction with the dedicated application, in order to be played to a user as an initial alert or a default alert.

In one aspect, the played sound signature has relevancy to a current location, time or context of a user, and may be a context based alert or may be played to the user by the communication system in response to performance of a current predetermined user activity which has been defined in the profile. The predetermined user activity may be selected from the group consisting of driving, being in a meeting, shopping and performing a movement.

In one aspect, the application is rejected when sound properties of the uploaded sound signature are similar to other sound signatures stored in the database in accordance with predefined similarity criteria.

In one aspect, the authorized person remotely activates another sound signature stored in the database by using the dedicated application as an interface. The another sound signature is activated by the authorized person when said entity changes its status or user activity.

In one aspect, one of more statuses of the entity are updated by using the dedicated application. The one of more statuses of the entity are selected from the group consisting of current mood status, availability status, and willingness status to interact with other people.

The sound signature(s) may be stored with association to the entity and its context (including location and movements, time, and status of the entity).

In one aspect, a validation date, expiration date, or a playing duration of the stored sound signature is defined by the profile.

### Brief Description of the Drawings

In the drawings:

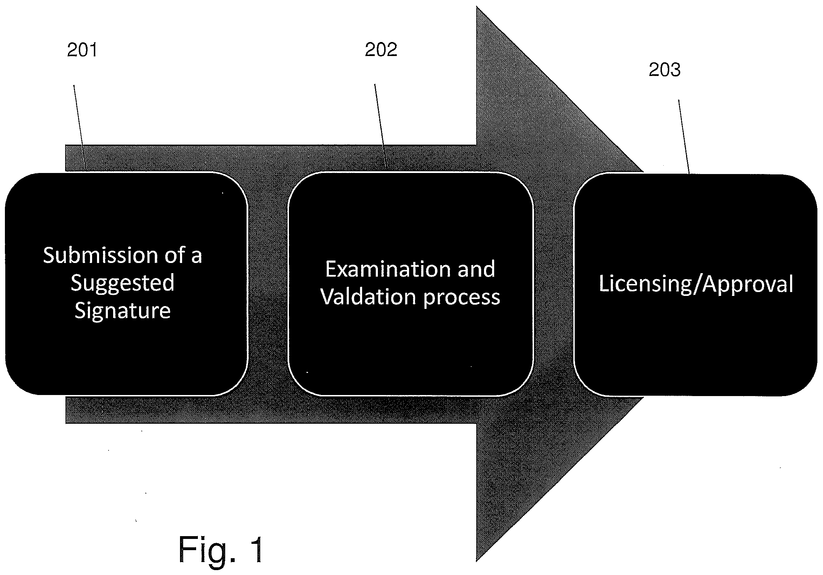

- Fig. 1 is a flowchart of the process of creating a database of sound signatures with association with objects, according to one embodiment of the present invention.

### Detailed Description of Preferred Embodiments

The system and method of the present invention are capable of creating a reliable and supervised collection of context based alerts in the form of sounds that are uniquely associated with objects and/or with users of a communication system. These alerts may be provided to a user, in order increase his awareness regarding events or entities of interest which may be relevant to his current location and context (the context may represent the things he is currently doing, such as driving, being in a meeting, shopping and other current activities). The user or the owner of the object will be able to have several characteristic sound alerts, such that he will be able to remotely activate one of them whenever he likes, to reflect his current context and mood, until he decides to change it and activate another characteristic sound alert. Each characteristic sound alert will be used as a sound signature of that user or object, when activated.

The sound signature of an object can be used to stimulate awareness to that object. An object can be a person, a point of interest, a car or any physical entity. The signature may consist of a short audio stream such as music, sound or human voice that optimally describes or represent the object, mostly by association. The sound signature can be also defined by the object itself (i.e. a person creates his own sound signature) or by anyone who dominate the object (i.e. shop owner which associate a specific audio to his shop).

The sound signature should be registered and licensed by a regulation authority and may be used as a trademark for any business that wishes to be affiliated with a specific sound, beside a logo or a certain brand name, as a commercial identifier.

According to an embodiment of the invention, all sound signatures will be stored at a unified database. Each record in this database will contain the characteristic sound alert, the object details (description, location and type), validation date and expiration dates, etc. The database will be managed by an official regulating authority which will be responsible for maintenance, registration and defining the regulations and criteria of valid signatures. In addition the official authority will allow users to interface the database with a dedicated application, which functions as an Application User Interface (API). This API will enable to link the sound of any object both to online and offline modes.

Fig. 1 illustrates the process of registration of sound signatures in the database. At the first step 201, a request for registering a sound signature in the database will be submitted to the official authority, which includes the sound signature with association to a specific object. An application for registration can be submitted both physically and by any electronic means (e-mail, web etc.).

The application will be examined to verify that it complies with a set of criteria that were published by the official authority. These criteria define the length of the sound signature, its quality, allowed content, as well as rule who is authorized to submit such an application and who can't. For example, if the entity is a shop, only the shop owner can submit an application for registering a sound signature for that shop. The suggested sound signature will be further examined to verify that it is appropriate (i.e., does not contain any banned words or content).

### Sound Signature Examination and Validation

At the next step 202, each suggested signature will be examined to verify that it complies with the rules and criteria mentioned above. In case when the suggested signature will not comply with these rules and criteria, the application will be rejected. The database will check whether or not this object already has a licensed signature and if it has, the application will be rejected. On the other hand, if the application for this sound signature will be submitted by the original owner of that signature, the application will be accepted and the database will update the existing sound signature. The database will compare the suggested sound signature to the other signatures that are stored in the database and if the sound properties will be found to be similar to other registered signatures (according to similarity criteria that will be predefined by the official authority), the application will be rejected.

After the validation process has been ended successfully, a license will be granted to sound signatures that met the criteria and a corresponding record will be created in the database for any registered sound signature database.

Finally, the database will contain pre-recorded characteristic sounds that are associated with users, such that each user has at least one characteristic sound.

The user will be able install a dedicated application on his cellphone, which will be adapted to:
- upload one or more characteristic sound alerts (sound signatures) for that user;
- update several statuses, each of which corresponds to a characteristic sound alert - for example, please do not disturb, I am busy, I am in a bad mood etc.;
- activate an initial characteristic sound alert for that user;
- if the user has additional characteristic sound alert, activate another selected characteristic sound alert for that user, whenever he decides to switch to another signature;

At the next step 203, the database will grant a permit (a kind of license) to each examined characteristic sound alert that met the criteria and store in the database, along with the right association to that user and his status. His status may be, his current mood, being busy or available, his will to interact with other people, etc. For example, when he is in a bad mood, the characteristic sound alert may be a sad melody.

It should be indicated that a user may be a private person or a business or a service provider. In case of a business like a Chinese restaurant, the characteristic sound alert may be a Chinese melody. According to another example, if the subscribed user is a transportation company, such as a bus service, there will be a sound of a bus that is played for several seconds. Other businesses may upload a known jingle that is associated with their service.

The database will use the mobile application (which is in continuous communication with the database), will ask the user to activate one of his licensed characteristic sound alerts stored therein, as an initial alert or a default alert. The user will be able to activate another characteristic sound alert from the database, whenever he likes using the mobile application as a user interface.

While some embodiments of the invention have been described by way of illustration, it will be apparent that the invention can be carried out with many modifications, variations and adaptations that are within the scope of persons skilled in the art, without exceeding the scope of the claims.

## Claims

1. A method for creating a database of sound signatures that are uniquely associated with entities linked to a communication system, comprising the steps of:
a) by a person authorized by an entity that is linked to said communication system, recording at least one characteristic sound signature associated with said entity and uploading a profile and said at least one characteristic sound signature to a database, said entity being a physical entity, a user, a point of sale or a service provider;
**characterized in that** said at least one characteristic sound signature is uploaded in conjunction with a dedicated application installed on a cellphone of said authorized person, said method further comprising the steps of:
b) submitting (201) an application, by said authorized person, for registering said at least one sound signature with said database;
c) allowing or denying the registration of said at least one sound signature as a record in said database by examining (202) said at least one sound signature and determining whether it complies with a set of predefined signature related criteria; and
d) storing said at least one sound signature in said database following registration (203), along with an association with a location of said entity as defined in said profile.

2. The method according to claim 1, further comprising the step of playing one of the stored sound signatures, by the communication system, in order to identify the entity.

3. The method according to claim 2, wherein the authorized person remotely activates one of the stored sound signatures in conjunction with the dedicated application, in order to be played to a user as an initial alert or a default alert.

4. The method according to claim 2, wherein the played sound signature has relevancy to a current location, time or context of a user.

5. The method according to claim 4, wherein the played sound signature is a context based alert.

6. The method according to claim 4, wherein one of the stored sound signatures is played to the user by the communication system in response to performance of a current predetermined user activity which has been defined in the profile.

7. The method according to claim 6, wherein the predetermined user activity is selected from the group consisting of driving, being in a meeting, shopping and performing a movement.

8. The method according to claim 1, wherein the application is submitted physically or by electronic means.

9. The method according to claim 1, wherein the set of signature related criteria are selected from the group consisting of length of the sound signature, quality of the sound signature, allowed content of the sound signature, and a rule as to who is authorized to submit the application.

10. The method according to claim 1, wherein the application is rejected when sound properties of the uploaded sound signature are similar to other sound signatures stored in the database in accordance with predefined similarity criteria.

11. The method according to claim 3, wherein the authorized person remotely activates another sound signature stored in the database by using the dedicated application as an interface.

12. The method according to claim 11, wherein the another sound signature is activated by the authorized person when said entity changes its status or user activity.

13. The method according to claim 1, wherein one of more statuses of the entity are updated by using the dedicated application.

14. The method according to claim 13, wherein the one of more statuses of the entity are selected from the group consisting of current mood status, availability status, and willingness status to interact with other people.

15. The method according to claim 1, wherein a validation date, expiration date, or a playing duration of the stored sound signature is defined by the profile.

## Patentansprüche

1. Verfahren zum Erstellen einer Datenbank von Tonsignaturen, die eindeutig Entitäten zugeordnet sind, die mit einem Kommunikationssystem verbunden sind, umfassend die Schritte:
a) Aufzeichnen mindestens einer der Entität zugeordneten charakteristischen Tonsignatur und Hochladen eines Profils und der mindestens einen charakteristischen Tonsignatur in eine Datenbank durch eine Person, die von einer mit dem Kommunikationssystem verbundenen Entität autorisiert ist, wobei die Entität eine physische Entität, ein Benutzer, eine Verkaufsstelle oder ein Dienstanbieter ist,
**dadurch gekennzeichnet, dass** die mindestens eine charakteristische Tonsignatur in Verbindung mittels einer dedizierten Anwendung hochgeladen wird, die auf einem Mobiltelefon der berechtigten Person installiert ist, wobei das Verfahren ferner die folgenden Schritte umfasst:
b) Abgeben (201) eines Antrags der berechtigten Person auf Registrierung der mindestens einen Tonsignatur bei der Datenbank,
c) Gestatten oder Verweigern der Registrierung der mindestens einen Tonsignatur als einen Datensatz in der Datenbank durch Prüfen (202) der mindestens einen Tonsignatur und durch Feststellen, ob sie mit einer Reihe vordefinierter signaturbezogener Kriterien übereinstimmt, und
d) Speichern der mindestens einen Tonsignatur in der Datenbank nach der Registrierung (203) zusammen mit einer Zuordnung zu einem Ort der Entität, wie in dem Profil definiert.

2. Verfahren nach Anspruch 1, ferner umfassend den Schritt des Wiedergebens einer der gespeicherten Tonsignaturen durch das Kommunikationssystem, um die Entität zu identifizieren.

3. Verfahren nach Anspruch 2, wobei die berechtigte Person eine der gespeicherten Tonsignaturen in Verbindung mit der dedizierten Anwendung ferngesteuert aktiviert, damit sie einem Benutzer als Initialalarm oder Standardalarm wiedergegeben wird.

4. Verfahren nach Anspruch 2, wobei die wiedergegebene Tonsignatur Relevanz zu einem aktuellen Ort, Zeitpunkt oder Kontext eines Benutzers hat.

5. Verfahren nach Anspruch 4, wobei die wiedergegebene Tonsignatur ein kontextbezogener Alarm ist.

6. Verfahren nach Anspruch 4, wobei eine der gespeicherten Tonsignaturen dem Benutzer vom Kommunikationssystem als Reaktion auf die Ausführung einer im Profil definierten aktuellen vorbestimmten Benutzeraktivität wiedergegeben wird.

7. Verfahren nach Anspruch 6, wobei die vorbestimmte Benutzeraktivität aus der Gruppe bestehend aus Lenken eines Fahrzeugs, Teilnehmen an einer Besprechung, Einkaufen und Ausführen einer Bewegung ausgewählt ist.

8. Verfahren nach Anspruch 1, wobei der Antrag physisch oder elektronisch abgegeben wird.

9. Verfahren nach Anspruch 1, wobei der Satz signaturbezogener Kriterien aus der Gruppe bestehend aus Länge der Tonsignatur, Qualität der Tonsignatur, zulässigem Inhalt der Tonsignatur und einer Regel zu der zur Abgabe des Antrags berechtigten Person ausgewählt ist.

10. Verfahren nach Anspruch 1, wobei der Antrag abgelehnt wird, wenn die Toneigenschaften der hochgeladenen Tonsignatur anderen in der Datenbank gespeicherten Tonsignaturen nach vorgegebenen Ähnlichkeitskriterien ähnlich sind.

11. Verfahren nach Anspruch 3, wobei die berechtigte Person eine weitere in der Datenbank gespeicherte Tonsignatur mittels der dedizierten Anwendung als Schnittstelle ferngesteuert aktiviert.

12. Verfahren nach Anspruch 11, wobei die andere Tonsignatur von der berechtigten Person aktiviert wird, wenn die Entität ihren Status oder ihre Benutzeraktivität ändert.

13. Verfahren nach Anspruch 1, wobei einer von mehreren Status der Entität durch Verwendung der dedizierten Anwendung aktualisiert wird.

14. Verfahren nach Anspruch 13, wobei der eine von mehreren Status der Entität aus der Gruppe bestehend aus dem aktuellen Stimmungsstatus, dem Verfügbarkeitsstatus und dem Bereitschaftsstatus zur Interaktion mit anderen Personen ausgewählt ist.

15. Verfahren nach Anspruch 1, wobei ein Validierungsdatum, ein Verfallsdatum oder eine Wiedergabedauer der gespeicherten Tonsignatur durch das Profil definiert ist.

## Revendications

1. Procédé de création d'une base de données de signatures acoustiques qui sont associées de façon unique à des entités liées à un système de communication, comprenant les étapes consistant :
a) par une personne autorisée par une entité qui est liée audit système de communication, à inscrire au moins une signature acoustique caractéristique associée à ladite entité et à télécharger un profil et ladite au moins une signature acoustique caractéristique dans une base de données, ladite entité étant une entité physique, un utilisateur, un point de vente ou un fournisseur de services ;
**caractérisé en ce que** ladite au moins une signature acoustique caractéristique est téléchargée conjointement avec une application dédiée installée sur un téléphone cellulaire de ladite personne autorisée, ledit procédé comprenant en outre les étapes consistant :
b) à soumettre (201) une demande, par ladite personne autorisée, pour inscrire ladite au moins une signature acoustique avec ladite base de données ;
c) à permettre ou refuser l'inscription de ladite au moins une signature acoustique sous la forme d'un enregistrement dans ladite base de données en examinant (202) ladite au moins une signature acoustique et en déterminer si elle est conforme à un ensemble de critères prédéfinis se rapportant à une signature ; et
d) à stocker ladite au moins une signature acoustique dans ladite base de données après l'inscription (203), conjointement avec une association à un emplacement de ladite entité tel que défini dans ledit profil.

2. Procédé selon la revendication 1, comprenant en outre l'étape consistant à lire l'une des signatures acoustiques stockées, par le système de communication, afin d'identifier l'entité.

3. Procédé selon la revendication 2, dans lequel la personne autorisée active à distance l'une des signatures acoustiques stockées conjointement avec l'application dédiée, afin qu'elle soit lue à un utilisateur sous la forme d'une alerte initiale ou d'une alerte par défaut.

4. Procédé selon la revendication 2, dans lequel la signature acoustique lue a une pertinence par rapport à un emplacement, une heure ou un contexte actuel d'un utilisateur.

5. Procédé selon la revendication 4, dans lequel la signature acoustique lue est une alerte basée sur le contexte.

6. Procédé selon la revendication 4, dans lequel l'une des signatures acoustiques stockées est lue à l'utilisateur par le système de communication en réponse à la réalisation d'une activité d'utilisateur prédéterminée actuelle qui a été définie dans le profil.

7. Procédé selon la revendication 6, dans lequel l'activité d'utilisateur prédéterminée est sélectionnée dans le groupe constitué par : conduire, être en réunion, faire les courses et réaliser un mouvement.

8. Procédé selon la revendication 1, dans lequel la demande est soumise physiquement ou par des moyens électroniques.

9. Procédé selon la revendication 1, dans lequel l'ensemble de critères se rapportant à une signature est sélectionné dans le groupe constitué par : longueur de la signature acoustique, qualité de la signature acoustique, contenu permis de la signature acoustique, et une règle quant à qui est autorisé à soumettre la demande.

10. Procédé selon la revendication 1, dans lequel la demande est rejetée lorsque des propriétés sonores de la signature acoustique téléchargée sont similaires à d'autres signatures acoustiques stockées dans la base de données conformément à des critères de similarité prédéfinis.

11. Procédé selon la revendication 3, dans lequel la personne autorisée active à distance une autre signature acoustique stockée dans la base de données en utilisant l'application dédiée en tant qu'interface.

12. Procédé selon la revendication 11, dans lequel l'autre signature acoustique est activée par la personne autorisée lorsque ladite entité change son état ou son activité d'utilisateur.

13. Procédé selon la revendication 1, dans lequel un ou plusieurs états de l'entité sont mis à jour en utilisant l'application dédiée.

14. Procédé selon la revendication 13, dans lequel le ou les états de l'entité sont sélectionnés dans le groupe constitué par : état d'humeur actuel, état de disponibilité, et état de volonté d'interaction avec d'autres personnes.

15. Procédé selon la revendication 1, dans lequel une date de validation, une date d'expiration, ou une durée de lecture de la signature acoustique stockée est définie par le profil.
